Europäisches Patentamt

European Patent Office

Office européen des brevets

(19)

(11) Numéro de publication : **0 086 164**
**B1**

(12) # FASCICULE DE BREVET EUROPÉEN

(45) Date de publication du fascicule du brevet :
28.08.85

(21) Numéro de dépôt : 83420003.2

(22) Date de dépôt : 12.01.83

(51) Int. Cl.⁴ : **F 16 C 11/10, F 16 C 7/00**

(54) **Mécanisme de liaison débrayable entre deux pièces ou organes quelconques.**

(30) Priorité : 28.01.82 FR 8201750

(43) Date de publication de la demande :
17.08.83 Bulletin 83/33

(45) Mention de la délivrance du brevet :
28.08.85 Bulletin 85/35

(84) Etats contractants désignés :
AT BE CH DE GB IT LI LU NL SE

(56) Documents cités :
FR-A- 1 310 611
GB-A- 535 305
US-A- 1 464 308
US-A- 2 356 033

(73) Titulaire : ALLIBERT S.A. Société Anonyme Française
129, avenue Léon Blum
F-38100 Grenoble (FR)

(72) Inventeur : Poncet, Jean-Pierre
Saint Nazaire Les Eymes
F-38330 Saint Ismier (FR)

(74) Mandataire : Maureau, Bernard
CABINET GERMAIN & MAUREAU 20, boulevard E.
Deruelle B.P. 11
F-69392 Lyon Cedex 06 (FR)

EP 0 086 164 B1

## Description

L'invention a pour objet un mécanisme de liaison débrayable entre deux pièces ou organes quelconques ; et elle concerne plus précisément un mécanisme permettant de supprimer momentanément, mais de façon contrôlée, la rigidité dans la liaison entre deux pièces ou deux organes quelconques, par exemple entre un outil et son support ou entre une pièce quelconque et son support.

C'est ainsi qu'entre autres applications, l'invention vise, à titre d'exemple non limitatif, l'extraction hors des moules des pièces moulées en résine synthétique ou des pièces de fonderie.

Dans le cas particulier du moulage des pièces en résine synthétique, les moules sont en effet couramment équipés de systèmes éjecteurs agissant lors de l'ouverture du moule, et après fonctionnement de ces systèmes éjecteurs la pièce moulée est extraite manuellement hors du moule. On a bien cherché à extraire mécaniquement les pièces moulées après leur éjection ; mais alors se pose un problème. Si en effet des organes mécaniques de préhension sont prévus pour extraire les pièces moulées, il est nécessaire que ces organes saisissent la pièce avant fonctionnement des systèmes éjecteurs, car pour être saisie la pièce doit être à l'état immobile dans le moule. Il se pose toutefois alors un autre problème provenant de ce que le dispositif mécanique de préhension doit être synchronisé avec le mouvement des dispositifs éjecteurs.

L'invention apporte une solution à ce problème, en proposant un mécanisme de liaison grâce auquel la rigidité de la liaison entre le dispositif de préhension et son support est supprimée momentanément, à savoir pendant la phase de fonctionnement des dispositifs éjecteurs.

Par le FR-A-1 310 611 est connu un dispositif d'articulation qui comporte une rotule constituant l'une des extrémités d'un bras de liaison et logée dans une cage complémentaire qui est aménagée dans un support équipé d'un moyen permettant de freiner le déplacement de la rotule dans la cage. Ce moyen ne permet pas toutefois de garantir, en position d'embrayage, une entière rigidité et un parfait alignement entre le bras et son support. Or, il s'agit là de conditions qui doivent impérativement être satisfaites dans de nombreuses applications, notamment, par exemple, dans le cas de la liaison entre le dispositif de préhension d'une pièce dans son moule, et son support.

Le mécanisme de liaison débrayable conforme à l'invention étant du type précité constitué par au moins un bras se terminant à l'une de ses extrémités par une rotule logée dans une cage ayant une forme de calotte sphérique et aménagée dans un support présentant un alésage débouchant dans cette cage et servant de logement à un organe soumis à une poussée réglable, son originalité réside dans le fait que cet organe est constitué par une bille pénétrant, en position d'embrayage, dans une cavité aménagée dans la rotule du bras, ce mécanisme réalisant, en position d'embrayage, le retour automatique du bras dans une position précise toujours rigoureusement identique.

C'est le bras à rotule qui sert de support à l'organe (pièce moulée, outil ou autre) dont la liaison avec son support doit passagèrement manquer de rigidité. Dans le cas particulier de l'extraction des pièces moulées, c'est précisément pendant la phase d'absence de rigidité dans la liaison entre l'organe de préhension et la pièce moulée qu'est déclenché le fonctionnement des systèmes éjecteurs.

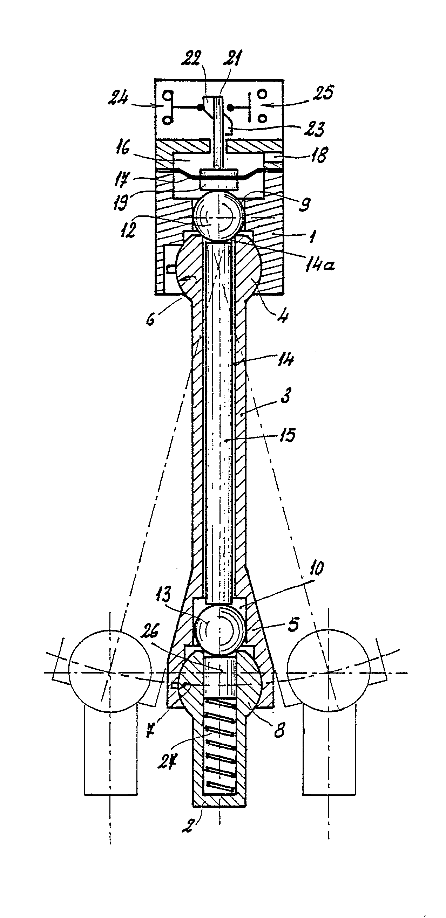

L'invention sera bien comprise et ses avantages ainsi que d'autres caractéristiques ressortiront bien d'ailleurs de la description qui suit, en référence au dessin schématique annexé représentant, à titre d'exemple non limitatif, une forme d'exécution de ce mécanisme de liaison débrayable. Dans ce dessin :

1 désigne un support fixe et 2 un support mobile, par exemple le support d'un outil ou d'un organe de préhension. Entre ces deux supports est placé un bras 3 qui se termine à l'une de ses extrémités par une rotule 4, et à son autre extrémité par une embase 5.

La rotule 4 du bras 3 est logée dans une cage 6 en forme de calotte sphérique aménagée dans la partie inférieure du support 1.

L'embase 5 du bras 3 comporte elle-même, dans sa zone inférieure, une cage 7 en forme de calotte sphérique servant de logement à la tête, en forme de rotule 8, du support 2.

Le support 1 et l'embase 5 présentent par ailleurs chacun un alésage, respectivement 9 et 10, servant de logement à une bille, respectivement 12 et 13. Le bras 3 présente lui-même, sur toute sa longueur, un alésage 14 servant de logement à une tige axiale 15 qui se trouve interposée entre les billes 12 et 13.

Le support 1 est équipé d'un organe de poussée sur la bille 12. Cet organe est constitué par un vérin à air comprimé 16, comprenant une membrane 17 qui, lorsqu'elle est déformée par l'air comprimé pénétrant par l'ajutage 18 dans la partie supérieure du vérin, agit par son embase centrale 19 sur la bille 12. De cette embase est solidaire une tige 21 portant des cames latérales, respectivement 22 et 23 destinées à la commande de contacteurs électriques, respectivement 24 et 25.

De son côté, la bille inférieure 13 est elle-même soumise par dessous à la poussée d'un piston 26 qui, monté coulissant dans un alésage du support 2, est soumis à la poussée d'un ressort 27.

Lorsque le mécanisme de liaison est en position normale d'utilisation, il occupe la position représentée en traits pleins au dessin. Dans cette position, la bille supérieure 12 exerce, grâce au vérin 16, une poussée axiale suffisante sur la rotule 4 du bras 3 et sur la tige 15, pour que l'ensemble : support 1, bras 3 et support 2 demeure en état d'alignement. Il y a alors rigidité dans la liaison entre le support 1 et le support 2, c'est-à-dire entre le support 1 et, par exemple, l'organe de préhension ou l'outil qui est fixé sur le support 2.

Si à un moment donné la rigidité de la liaison entre le support 1 et le support 2 doit cesser passagèrement, il suffit de supprimer l'action du vérin 16 sur la bille supérieure 12, c'est-à-dire sur la bille agissant en tête du bras 3. L'absence de pression dans la partie supérieure du vérin donne en effet une liberté angulaire de déplacement au bras 3. Cette liberté de déplacement est illustrée en traits mixtes au dessin.

Considérant par exemple l'application de ce mécanisme de liaison à l'extraction de pièces moulées hors des moules utilisées dans le moulage des pièces en résine synthétique ou dans le moulage des pièces de fonderie, il suffit de déclencher le fonctionnement des systèmes éjecteurs, après que l'organe de préhension associé au support 2 ait saisi la pièce moulée, et après que l'action du vérin 16 ait cessé sur la bille supérieure 12 du mécanisme. Dès après fonctionnement du dispositif éjecteur, le fonctionnement du vérin 16 est à nouveau déclenché pour rétablir la rigidité dans la liaison entre les deux supports 1 et 2.

Il est à noter que les deux contacteurs 24 et 25 permettent, grâce à des voyants, de savoir à tout moment si le mécanisme de liaison est embrayé ou débrayé, et ainsi de capter et de transmettre toute information relative au fonctionnement du mécanisme.

Il faut en effet considérer que ce mécanisme peut aussi jouer le rôle de limiteur de couple. Si, en effet, le support 2 doit exercer un effort anormalement élevé pour transmettre son mouvement à l'organe qui lui est associé (pièce moulée à extraire, outil ou autre), cet effort conduit la rotule inférieure 8 à repousser la bille inférieure 13 qui, elle-même, repousse la bille supérieure 12 par l'intermédiaire de la tige centrale 15. Il y a ainsi débrayage ; et l'information de ce débrayage est captée et transmise grâce à la came 23 et au contacteur 25.

## Revendications

1. Mécanisme de liaison débrayable entre deux pièces ou organes quelconques, constitué par au moins un bras (3) se terminant à l'une de ses extrémités par une rotule (4) logée dans une cage (6) ayant une forme de calotte sphérique et aménagée dans un support (1) présentant un alésage (9) débouchant dans cette cage et servant de logement à un organe (12) soumis à une poussée réglable, caractérisé en ce que cet organe est constitué par une bille (12) pénétrant, en position d'embrayage, dans une cavité (14a) aménagée dans la rotule (4) du bras (3), ce mécanisme réalisant, en position d'embrayage, le retour automatique du bras (3) dans une position précise toujours rigoureusement identique.

2. Mécanisme de liaison débrayable selon la revendication 1, caractérisé en ce que sur l'extrémité libre du bras (3) est directement fixé la pièce ou l'organe devant être relié de façon débrayable au support de base (1).

3. Mécanisme de liaison débrayable selon la revendication 1, caractérisé en ce que l'extrémité libre du bras (3) présente une forme d'embase (5), à l'intérieur de laquelle sont aménagées d'une part, une cage (7) en forme de calotte sphérique recevant une rotule (8) constituant l'extrémité supérieure d'un bras (2) sur lequel est fixé la pièce ou l'organe à relier au support de base (1), et, d'autre part, un alésage (10) servant de logement à une bille (13) prenant appui dans un alésage du support inférieur (2), et en ce que le bras (3) comporte sur toute sa longueur un alésage (14) servant au passage et au coulissement d'une tige centrale (15) dont les extrémités sont en contact, respectivement avec la bille supérieure (12) et avec la bille inférieure (13).

4. Mécanisme de liaison débrayable selon les revendications 1 et 3, caractérisé en ce que la bille supérieure (12) est soumise à la poussée d'un vérin à air comprimé (16, 17, 19) et la bille inférieure (13) est soumise à la poussée d'un piston (26) monté coulissant dans le support inférieur (2) et sur lequel agit un ressort (27).

5. Mécanisme de liaison débrayable selon la revendication 3, caractérisé en ce que le piston (19) du vérin à air comprimé (16) se prolonge par une tige (21) portant deux cames (22) et (23) coopérant respectivement avec des contacteurs (24) et (25) contrôlant l'ouverture et la fermeture de circuits électriques déterminant le fonctionnement de voyants lumineux ou sonores indiquant si le mécanisme est embrayé ou débrayé.

## Claims

1. A disengageable link mechanism between any two parts or members, consisting of at least one arm (3), terminating at one of its ends in a ball and socket joint (4) housed in a cage (6) in the form of a spherical cap and arranged in a support (1) having a bore (9) which opens into this cage and serves to house a member (12) which is subjected to an adjustable thrust, characterised in that this member consists of a ball (12) which, in the engaged position, enters a cavity (14a) formed in the ball and socket joint (4) of the arm (3), this member, in the engaged position, automatically returning the arm (3) to a precise position which is always absolutely the same.

2. A disengageable link mecanism according to Claim 1, characterised in that at the free end of the arm (3) is secured directly the part or member which is to be releasably connected to the basic support (1).

3. A disengageable link mechanism according to Claim 1, characterised in that the free end of the arm (3) has the shape of a flange (5), inside which are arranged firstly, a cage (7), in the form of a spherical cap, which receives a ball and socket joint (8), constituting the upper end of an arm (2) on which is secured the part of member to be connected to the basic support (1), and secondly, a bore (10), serving to house a ball (13) bearing within a bore in the lower support (2), and in that the arm (3) is provided throughout its length with a bore (14) in which passes and slides a central rod (15), whose ends are in contact with the upper ball (12) and the lower ball (13), respectively.

4. A disengageable link mechanism according to Claims 1 and 3, characterised in that the upper ball (12) is subjected to the thrust of a compressed air jack (16, 17,19), and in that the lower ball (13) is subjected to the thrust of a piston (26) mounted so that it slides in the lower support (2), and on which acts a spring (27).

5. A disengageable link mechanism according to Claim 3, characterised in that the piston (19) of the compressed air jack (16) is extended by a rod (21) supporting two cams (22) and (23), which interact with contactors (24) and (25) respectively, thereby controlling the opening and closing of electrical circuits determining the operation of luminous or acoustic indicators, which indicate whether the mechanism is engaged or disengaged.

**Patentansprüche**

1. Auskuppelbarer Verbindungsmechanismus zur verbindung zweier beliebiger Teile oder Organe mit wenigstens einem Arm (3), der mit einem seiner Enden in einer Gelenkkugel (4) ausläuft, die in einem in einem Trägerteil (1) angebrachten Käfig (6) in Form einer Sphärischen Kalotte aufgenommen ist, wobei dieses Trägerteil eine Bohrung (9) besitzt, die in dem genannten Käfig mündet und als Aufnahme für ein einem regelbaren Druck ausgesetztes Organ (12) dient, dadurch gekennzeichnet, daß dieses Organ von einer Kugel (12) gebildet ist, die in Einkuppelposition in einen in der Gelenkkugel (3) des Arms (3) ausgebildeten Hohlraum (14a) eindringt, und daß der Mechanismus in der Einkuppelstellung die automatische Rückkehr des Arms (3) in eine immer streng identische präzise Position bewirkt.

2. Auskuppelbarer Verbindungsmechanismus nach Anspruch 1, dadurch gekennzeichnet, daß das Teil oder das Organ, das auskuppelbar mit dem Basisträgerteil (1) verbunden werden soll, direkt an dem freien Ende des Arms (3) befestigt ist.

3. Auskuppelbarer Verbindungsmechanismus nach Anspruch 1, dadurch gekennzeichnet, daß das freie Ende des Arms ein Ansatzteil (5) bildet, in dessen Innern einerseits ein Käfig (7) in Form einer sphärischen Kalotte zur Aufnahme einer Gelenkkugel (8), die das obere Ende eines Arms (2) bildet, an welchem das mit dem Basisträgerteil (1) zu verbindende Teil oder Organ fixiert ist, und andererseits eine Bohrung (10) zur Aufnahme einer Kugel (13), die sich in einer Bohrung des Trägerteil (2) abstützt, angeordnet sind und daß der Arm (3) mit einer Bohrung (14) versehen ist, die ihn über seine ganze Länge durchdringt und die für den Durchtritt und die gleitende Lagerung eines zentralen Stabes (15) dient, dessen Enden die obere Kugel (12) bzw. die obere Kugel (13) berühren.

4. Auskuppelbarer Verbindungsmechanismus dadurch gekennzeichnet, daß die obere Kugel (12) dem Druck eines Druckluftzylinder (16, 17, 19) und die untere Kugel (14) dem Druck eines Kolbens (26) ausgesetzt ist, der in dem unteren Trägerteil (2) gleitend montiert ist und auf den eine Feder (27) einwirkt.

5. Auskuppelbarer Verbindungsmechanismus nach Anspruch 4, dadurch gekennzeichnet, daß als Verlängerung des Kolbens (19) des Druckluftzylinders (16) ein Stab (21) vorgesehen ist, der zwei Nocken (22, 23) trägt, die mit Schaltern 24 bzw. 25 zusammenwirken, die ihrerseits das Öffnen und das Schließen elektrischer Stomkreise steuern, welche die Funktion von optischen oder akustischen Signalgebern bestimmen, die anzeigen, ob der Mechanismus eingekuppelt oder ausgekuppelt ist.